Europäisches Patentamt

(19) European Patent Office

Office européen des brevets

(11) Numéro de publication: **0 017 532**
**B1**

(12) **FASCICULE DE BREVET EUROPEEN**

(45) Date de publication du fascicule du brevet: **23.03.83**

(51) Int. Cl.³: **G 01 S 13/44, G 01 S 7/46**

(21) Numéro de dépôt: **80400344.0**

(22) Date de dépôt: **14.03.80**

(54) Dispositif de traitement de signaux d'écartométrie angulaire d'un radar monopulse et radar comportant un tel dispositif.

(30) Priorité: **30.03.79 FR 7908094**

(43) Date de publication de la demande:
**15.10.80 Bulletin 80/21**

(45) Mention de la délivrance du brevet:
**23.03.83 Bulletin 83/12**

(84) Etats contractants désignés:
**DE GB IT NL**

(56) Documents cités:
**FR - A - 2 312 037**
**US - A - 3 890 617**

**IEEE TRANSACTIONS ON AEROSPACE, AND
ELECTRONIC SYSTEMS, vol. AES-7 no. 1,
janvier 1971, pages 160—170 New York,
U.S.A. SHERMAN: "Complex indicated angles
applied to unresolved radar targets and
Multipath"
IEEE CONFERENCE PUBLICATION no. 105
RADAR-PRESENT and FUTURE, 23—25,
octobre 1973, pages 160—165 London, G.B.
DAX: "Accurate tracking of low elevation
targets over the sea with a monopulse radar"**

(73) Titulaire: **THOMSON-CSF
173, Boulevard Haussmann
F-75379 Paris Cedex 08 (FR)**

(72) Inventeur: **Lacomme, Philippe
"THOMSON-CSF" CSPI-173, Bld Haussmann
F-75360 Paris Cedex 08 (FR)**

(74) Mandataire: **Eisenbeth, Jacques Pierre et al,
THOMSON-CSF SCPI 173, Bld Haussmann
F-75379 Paris Cedex 08 (FR)**

Dispositif de traitement de signaux d'écartométrie angulaire d'un radar monopulse
et radar comportant un tel dispositif

La présente invention est relative à un dispositif de traitement de signaux d'écartométrie angulaire d'un radar monopulse permettant, notamment, un traitement numérique à faible nombre de niveaux de codage.

Dans les radars de poursuite monopulse le principe de la mesure d'écartométrie d'une cible, ou écart de la direction de cette cible par rapport à l'axe de l'antenne du radar, est basé sur la comparaison d'un signal somme $\Sigma$ résultant de deux diagrammes de rayonnement de l'antenne et d'un signal de différence $\Delta$ résultant de la différence des signaux d'écho d'une même cible relatifs à ces mêmes diagrammes. Le calcul de l'écartométrie de la cible est effectué pour chaque récurrence d'émission par le calcul de rapport

$$\frac{\Delta}{\Sigma}$$

est la valeur moyenne du résultat est calculée sur un nombre donné de récurrences d'émission du radar. En fonctionnement le signal est toujours mêlé au bruit de récepteur et le calcul de l'écartométrie élémentaire pour chaque récurrence rests entaché d'erreur, notamment aux faibles niveaux du signal différence $\Delta$, le calcul de la valeur moyeene des écartométries élémentaires no permettant pas d'améliorer, du fait de la non linéarité du rapport

$$\frac{\Delta}{\Sigma}$$

en fonction de l'écart à mesurer pour un rapport signal à bruit donné, le résultat du calcul final.

Dans les radars de poursuite actuels, le problème de traitement, notamment le traitement numérique des signaux d'écartométrie, est lié au choix du nombre de bits de définition nécessaires à ce traitement. De manière générale le signal somme $\Sigma$ a, par exemple, une dynamique, ou rapport du signal détecté d'amplitude maximale au signal détecté d'amplitude minimale, de l'ordre 60 dB. La fonction veille préalable à la fonction poursuite de ces radars nécessite, notamment pour le codage, le filtrage Doppler et la détection de contraste du signal, une plage de codage numérique de 10 bits plus un bit de signe. Le bit de poids le moins élevé est alors de l'ordre du niveau du signal minium, c'est-à-dire du niveau du bruit thermique du radar. Par contre le niveau du signal différence $\Delta$ est très inférieur au niveau du signal $\Sigma$ en particulier lorsque, en phase de poursuite, l'axe de l'antenne est pointé sur la cible. Le signal d'écartométrie représentatif du dépointage de la cible par rapport à l'axe de l'antenne est alors représenté par le rapport de l'amplitude des signaux $\Delta$ et $\Sigma$. Un ordre de grandeur du signal d'écartométrie

$$\frac{\Delta}{\Sigma}$$

est—20 dB pour un signal reçu d'une cible dans l'axe de l'antenne radar.

Une solution connue d'extraction des signaux d'écartométrie consiste à effectuer un codage des signaux vidéo fréquence différence $\Delta_i$ et somme $\Sigma_i$ ou des signaux vidéo fréquence différence $\Delta_j$ et somme $\Sigma_j$ obtenus par démodulation amplitude phas par un signal en quadrature de phase, puis à traiter ces composantes dans un filtre Doppler numérique avent d'effectuer pour chaque récurrence le rapport

$$\frac{\Delta i}{\Sigma i}$$

ou

$$\frac{\Delta j}{\Sigma j}$$

représentatif de signal d'écartométrie. Cependant pour les signaux proches de la limite de détection, c'est-à-dire pour un rapport signal à bruit proche de zéro dB, la définition du codage et du traitement nécessaire à la veille est de l'ordre du niveau du signal soit du niveau correspondant au bit de poids le moins élevé égal à la valeur efficace du bruit. La définition nécessaire au codage du signal différence $\Delta$ est alors intérieure de 15 dB, le codage et le traitement des écartométries nécessitant alors 2 à 3 bis d'information supplémentaires.

En conséquence, il n'est pas possible d'utiliser les circuits de traitement du signal de la fonction veille pour la fonction poursuite, notamment le codeur analogique numérique et le filtre Doppler numérique, le signal pour la fonction poursuite se trouvant à un niveau très inférieur au niveau correspondant du bit de poids le moins élevé de codeur de veille, donc à un niveau très inférieur à la définition des circuits de traitement de la fonction veille.

Le dispositif de traitement numérique d'un signal d'écartométrie selon l'invention permet de remédier aux inconvénients précités par un traitement approprié.

Un objet de la présente invention est la mise en oeuvre d'un dispositif permettant le codage et le traitement numérique des signaux somme $\Sigma$ et différence $\Delta$ avec la même définition tout en conservant, après codage, une même pente d'écartométrie.

Un autre objet de la présente invention est la mise en oeuvre d'un dispositif permettant le codage et le traitement des signaux somme $\Sigma$ et

différence $\Delta$ en vue de l'extraction du signal d'écartométrie par de seules opérations arithmétiques, le traitement pouvant être effectué sans dégradation de la pente d'écartométrie par les circuits de la fonction veille du radar.

Selon l'invention, le dispositif de traitement de signaux d'écartométrie angulaire d'un radar monopulse délivre au moins, en fonctionnnement à fréquence intermédiaire, un signal somme $\Sigma$ (fi) et un signal différence $\Delta$ (fi) porteur de l'information d'écart d'une cible par rapport à l'axe de l'antenne dans un plan de référence de l'antenne. La phase relative des signaux à fréquence intermédiaire somme $\Sigma$ (fi) et différence $\Delta$ (fi) définit dans le plan complexe des vecteurs somme $\vec{\Sigma}$ et différence $\vec{\Delta}$ porteurs de l'information d'écartométrie de cette cible par rapport à l'axe de l'antenne. Le dispositif selon l'invention comporte des moyens de calcul permettant pour chaque récurrence d'ordre K le calcul de composants $Vi_K$, $Vj_K$, dans le plan complexe, d'un vecteur d'écartométrie V tel que $Vi_K = \vec{\gamma} \cdot \vec{\varepsilon}$ et $Vj_K = (\vec{\gamma} \wedge \vec{\varepsilon}) . \vec{n}$, respectivement produit scalaire et produit mixte des vecteurs $\vec{\gamma}$, $\vec{\varepsilon}$, et $\vec{n}$ dans lesquels $\vec{\gamma}$ est un vecteur obtenu par combinaison linéaire des vecteurs $\vec{\Sigma}$ et $\vec{\Delta}$, $\vec{\gamma} = \vec{\Sigma} + jp\vec{\Delta}$, $\vec{\varepsilon}$ est un vecteur obtenu par combinaison linéaire des vecteurs $\vec{\Sigma}$ et $\vec{\Delta}$, $\vec{\varepsilon} = \vec{\Sigma} + jq\vec{\Delta}$, les nombres p et q étant des nombres réels avec p différent de q, $\vec{n}$ un vecteur unitaire orthogonal au plan $\vec{\gamma}$, $\vec{\varepsilon}$ et j l'opérateur de rotation de

$$\frac{\pi}{2}$$

dans le plan complexe. La phase relative $\varphi$ des vecteurs $\vec{\gamma}$ et $\vec{\varepsilon}$ est représentative dans le plan complexe de l'information d'écartométrie. Des moyens d'intégration sur N récurrences des composantes $Vi_K$ et $Vj_K$ du vecteur $\vec{V}$ délivrent les composantes Wi, Wj d'un vecteur $\vec{W}$ dont la phase dans le plan complexe est représentative de l'information utile d'écartométrie tel que

$$Wi = \sum_{K=1}^{N} Vi_K, \quad Wj = \sum_{K=1}^{N} Vj_K.$$

Des moyens de calcul délivrent un signal d'écartometrie utile $\hat{\varepsilon}$ rapport des composantes du vecteur $\vec{W}$ tel que $\hat{\varepsilon} = Wj/Wi$.

Un tel dispositif peut être utilisé dans tout système radar monopulse, le radar étant utilisé soit en poursuite continue soit en poursuite sur information discontinue à partir de la fonction veille du radar. Le produit scalaire et produit mixte des vecteurs $\vec{\gamma}$, $\vec{\varepsilon}$, $\vec{n}$ s'écrit respectivement $Vi_K = (\rho 1 \rho 2) \cos \varphi$ et $Vj_K = (\rho 1 \rho 2) \sin \varphi$ où $\rho 1$, $\rho 2$ représentent respectivement les modules des vecteurs $\vec{\gamma}$ et $\vec{\varepsilon}$. Tout mode de réalisation dans lequel les composantes $Vi_K$ et $Vj_K$ sont obtenues à partir d'une fonction du produit des modules des vecteurs $\vec{\gamma}$ et $\vec{\varepsilon}$ telles que $Vi_K = f(\rho 1 \rho 2) \cos \varphi$ et $Vj_K = f(\rho 1 \rho 2) \sin \varphi$ ne sort pas du cadre de la présente invention.

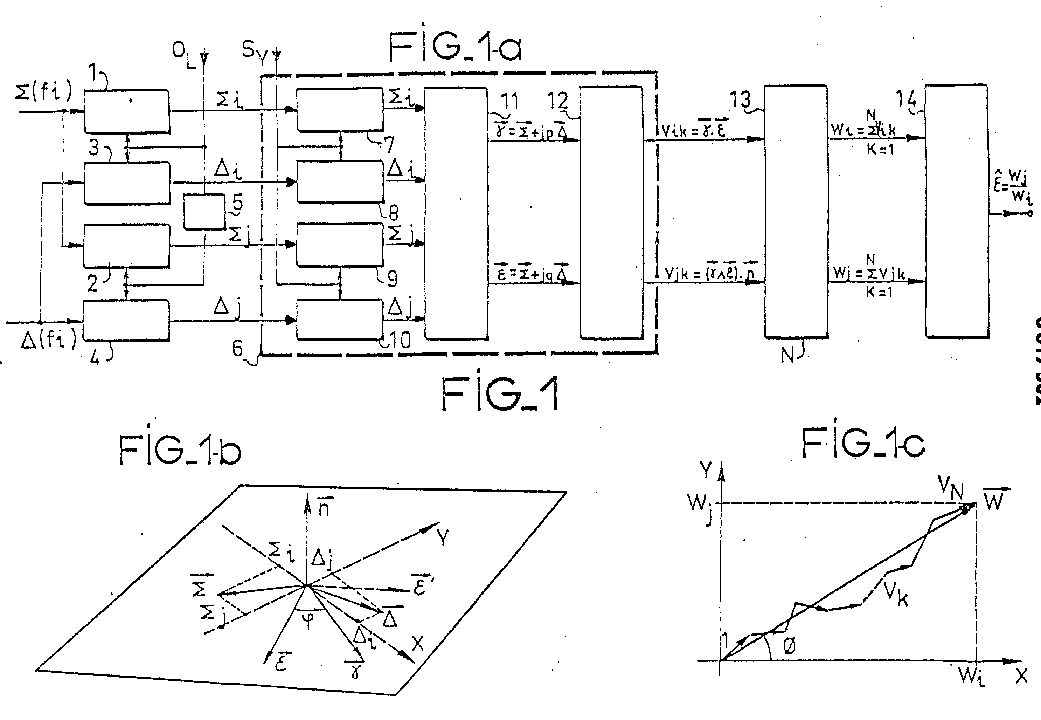

L'invention sera mieux comprise à l'aide de la description et des dessins ci-après dans lesquels la figure 1a représente un schéma synoptique du dispositif selon l'invention.

— la figure 1b, représente les vecteurs $\vec{\Sigma}$ et $\vec{\Delta}$ représentatifs de l'information d'écartométrie dans le plan complexe C;

— la figure 1c, représente dans le plan complexe les composantes du vecteur $\vec{W}$;

— la figure 2, représente un mode de réalisation particulier d'un dispositif de traitement numérique selon l'invention;

— la figure 3, représente un détail de réalisation d'un dispositif selon l'invention tel que représenté figure 2;

— la figure 4, représente un autre mode de réalisation non limitatif d'un dispositif selon l'invention dans lequel le calcul des composantes $Vi_K$, $Vj_K$ du vecteur d'écartométrie $\vec{V}$ est réalisé à l'aide de circuits analogiques.

Selon la figure 1a, le dispositif de traitement de signaux d'écartométrie angulaire d'un radar monopulse selon l'invention reçoit en fonctionnement à fréquence intermédiaire un signal somme $\Sigma$ (fi) et un signal différence $\Delta$ (fi) porteur de l'information d'écart d'une cible par rapport à l'axe de l'antenne dans un plan de référence de cette antenne. Les signaux à fréquence intermédiaire sont notés $\Sigma$ (fi) et $\Delta$ (fi) sur la figure 1a. Les signaux à fréquence intermédiaire $\Sigma$ (fi) et $\Delta$ (fi) sont reçus par des moyens de démodulation en phase et en quadrature de phase de ces signaux. Ces moyens de démodulation délivrent respectivement des signaux vidéo fréquence démodulés en phase $\Sigma i$, $\Delta i$ et des signaux vidéo fréquence démodulés en quadrature de phase $\Sigma j$, $\Delta j$, les signaux $\Sigma i$, $\Delta j$ et $\Delta i$, $\Delta j$ définissant dans le plan complexe respectivement des vecteurs $\vec{\Sigma}$ de composantes $\Sigma i$, $\Sigma j$ et $\vec{\Delta}$ de composantes $\Delta i$, $\Delta j$. Les vecteurs $\vec{\Sigma}$ et $\vec{\Delta}$ sont représentés figure 1b, dans le plan complexe C de repère X, Y et pour une cible ponctuelle sont colinéaires. Selon la figure 1a, les moyens de démodulation en phase sont constitués par des démodulateurs de phase référencés 1 et 3. Les démodulateurs de phase 1 et 3 reçoivent sur une première entrée les signaux $\Sigma$ (fi) et $\Delta$ (fi) et sur une deuxième entrée les signaux délivrés par un oscillateur local non représenté figure 1a, le signal délivré par l'oscillateur local est référencé OL sur la figure 1a. Les moyens de démodulation en quadrature de phase sont constitués par des démodulateurs de phase 2 et 4 recevant sur une première entrée les signaux $\Sigma$ (fi) et $\Delta$ (fi) et sur une deuxième entrée le signal délivré par l'oscillateur local par l'intermédiare d'un déphaseur de

$$\frac{\pi}{2}$$

référencé 5. Les démodulateurs de phase 1, 2, 3 et 4 délivrent respectivement les signaux $\Sigma i$, $\Sigma j$, $\Delta i$, $\Delta j$ aux moyens de calcul, pour chaque récurrence d'ordre K, des composantes $Vi_K$, $Vj_K$ d'un vecteur d'écartométrie $\vec{V}$. Les composantes $\Sigma i$, $\Sigma j$, $\Delta i$, $\Delta j$ de calcul de vecteur d'écartométrie $\vec{V}$ sont par exemple des signaux vidéo fréquence délivrés aux moyens de calcul 6 des composantes $Vi_K$, $Vj_K$ du vecteur d'écartométrie $\vec{V}$ sur la figure 1a. Selon un mode de réalisation non limitatif de la figure 1a, les moyens de calcul 6 des composantes $Vi_K$, $Vj_K$ du vecteur d'écartométrie $\vec{V}$ comportent des moyens d'échantillonnage ou échantillonneurs 7, 8, 9 et 10 pour, chaque récurrence des signaux vidéo fréquence en phase $\Sigma i$, $\Delta i$ et en quadrature de phase $\Sigma j$, $\Delta j$. Les échantillonneurs 7, 8, 9, 10 reçoivent en fonctionnement sur une entrée de commande d'échantillonnage un signal de commande d'échantillonnage synchrone de la fenêtre de poursuite délivrée pour chaque récurrence par la boucle de poursuite du radar. Le signal de command d'échantillonnage est noté Sy sur la figure 1a, la boucle de poursuite du radar n'étant par représentée sur cette figure afin de ne pas nuire à la clarté de celle-ci. Les échantillonneurs 7, 8, 9, et 10 délivrent respectivement les signaux $\Sigma i$, $\Delta i$, $\Sigma j$, $\Delta j$ à un circuit opérateur 11 de combinaison linéaire des vecteurs $\vec{\Sigma}$ et $\vec{\Delta}$. Le circuit opérateur de combinaison linéaire des vecteurs $\vec{\Sigma}$ et $\vec{\Delta}$ délivre respectivement un signal représentatif d'un vecteur $\vec{\gamma}$ et un signal représentatif d'un vecteur $\vec{\varepsilon}$ tel que $\vec{\gamma}=\vec{\varepsilon}+jp\vec{\Delta}$ et $\vec{\varepsilon}=\vec{\Sigma}+jq\vec{\Delta}$ dans lesquels p et q sont des nombres réels p étant différent de q. Les signaux représentatifs des vecteurs $\vec{\gamma}$ et $\vec{\varepsilon}$ sont délivrés à un circuit de calcul 12 pour chaque récurrence d'ordre K des composantes $Vi_K$, $Vj_K$ dans le plan complexe du vecteur d'écartométrie V. Les composantes $Vi_K$, $Vj_K$ du vecteur d'écartométrie V sont définies par les relations $Vi_K=\vec{\gamma}\cdot\vec{\varepsilon}$ et $Vj_K=(\vec{\gamma}\wedge\vec{\varepsilon})\cdot\vec{n}$ des vecteurs $\vec{\gamma}$, $\vec{\varepsilon}$ n. Selon la figure 1b la phase $\varphi$ relative des vecteurs $\vec{\gamma}$ et $\vec{\varepsilon}$ (ou angle entre $\vec{\gamma}$ et $\vec{\varepsilon}$) est représentative dans le plan complexe de l'information d'écartométrie de la cible. Les composantes $Vi_K$, $Vj_K$ du vecteur d'écartométrie $\vec{V}$ sont de la forme $f(\rho1\rho2)$ Cos $\varphi$ et $f(\rho1\rho2)$ Sin $\varphi$ respectivement ou $f(\rho1\rho2)$ est une fonction des modules des vecteurs $\vec{\gamma}$, $\varepsilon$, les composants $Vi_K$ et $Vj_K$ étant délivrées à des moyens 13 d'intégration sur N récurrence de ces composantes. Le nombre N de récurrence pendant lesquelles les composantes $Vi_K$, $Vj_K$ sont intégrées est lié à la bande passante de la boucle de poursuite du radar. Le moyens d'intégration 13 sont par exemple constitués par deux intégrateures non représentés figure 1a, les deux intégrateurs assurant respectivement une intégration séparée de chaque composante. Les moyens d'intégration sur N récurrences délivrent respectivement les composantes Wi Wj d'un vecteur $\vec{W}$ dont la phase $\phi$ dans le plan complexe est représentative de l'information utile d'écartométrie tel que

$$Wi=\sum_{K=1}^{N} Vi_K \qquad Wj=\sum_{K=1}^{N} Vj_K.$$

La phase $\phi$ du vecteur résultant $\vec{W}$ représente une valeur lissée de l'écartométrie ou écartométrie utile dont la valeur moyenne dépend beaucoup moins du rapport signal à bruit que dans les systèmes de traitement classiques. Les signaux représentatifs des composantes Wi et Wj du vecteur $\vec{W}$ sont délivrés à des moyens de calcul 14 du rapport de ces composantes. Les moyens de calcul 14 délivrent un signal d'écartométrie utile $\hat{\varepsilon}$ rapport des composantes du vecteur $\vec{W}$ tel que $\hat{\varepsilon}=Wj/Wi$. Le circuit opérateur de combinaison linéaire des vecteurs $\vec{\Delta}$ et $\vec{\Sigma}$, le circuit de calcul du vecteur $\vec{V}$, le circuit intégrateur 13 et le circuit de calcul du signal d'écartométrie utile $\hat{\varepsilon}$ rapport des composantes du vecteur $\vec{W}$ peuvent être, sans sortir du cadre de la présente invention, réalisés soit par des circuits analogiques soit par des circuits de traitement numérique. De façon générale, ce type de traitement nécessite des calculs trigonométriques, calcul des phases des vecteurs, calculs de Sn $\varphi$, Cos $\varphi$ et enfin de $\varphi$ phase relative des vecteurs $\vec{\gamma}$ et $\vec{\varepsilon}$, opérations qui peuvent être délicates à effectuer sans discontinuité.

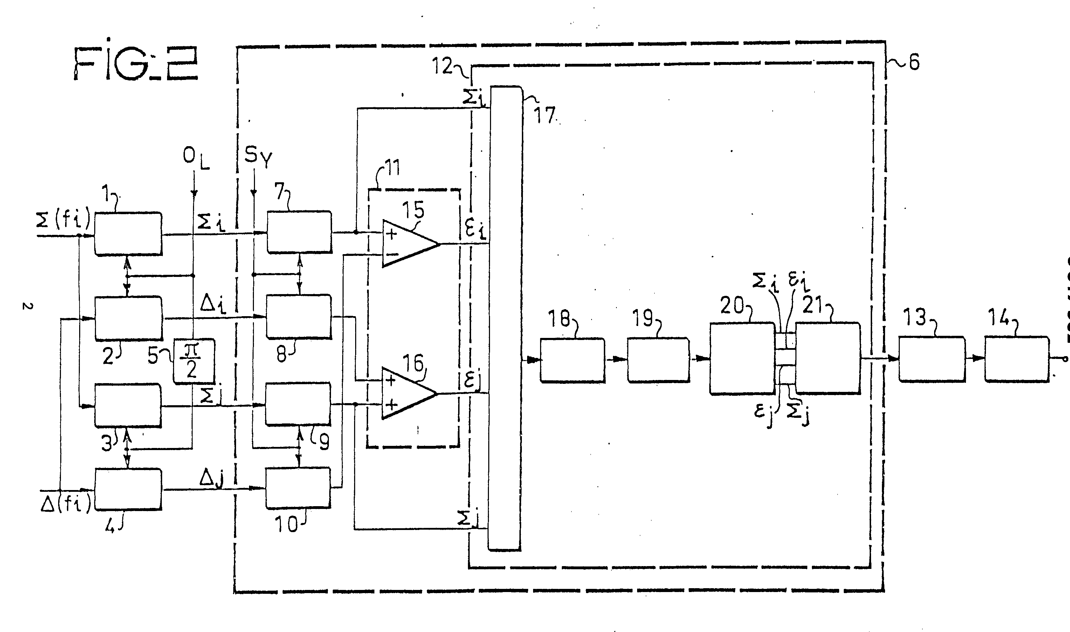

Selon la figure 2, le dispositif de traitement de signaux d'écartométrie angulaire d'un radar monopulse permet un traitement numérique de ces signaux dans lequel les seules opérations à effectuer sont des opérations arithmétiques. Un tel traitement est permis en particulier par le choix des nombres p et q pour lesquels les valeurs respectives sont choisies égales à 0 et 1. Dans ce cas les vecteurs $\vec{\gamma}$, $\vec{\varepsilon}$ sont définis respectivement par les relations $\vec{\gamma}=\vec{\Sigma}$ et $\vec{\varepsilon}=\vec{\Sigma}+j\vec{\Delta}$ définissant de ce fait une combinaison linéaire particulière. A cet effet le circuit opérateur 11 de combinaison linéaire vecteurs $\vec{\Sigma}$ et $\vec{\Delta}$ comporte des moyens ou circuit de calcul analogique pour chaque récurrence d'ordre K des composantes $\varepsilon i$, $\varepsilon j$ d'un vecteur $\vec{\varepsilon}=\vec{\Sigma}+j\vec{\Delta}$, les composantes $\varepsilon i$, $\varepsilon j$ du vecteur $\vec{\varepsilon}$ étant respectivement égales à $\varepsilon i=\Sigma i-\Delta j$ et $\varepsilon j=\Sigma j+\Delta i$. A cet effet le circuit opérateur de combinaison linéaire des vecteurs $\vec{\Sigma}$ et $\vec{\Delta}$ comporte deux sommateurs 15, 16 recevant respectivement sur une première entrée positive les valeurs échantillonnées du signal $\Sigma i$ et sur une deuxième entrée négative les valeurs échantillonnées du signal $\Delta j$, et, sur une première entrée positive les valeurs échantillonnées du signal $\Delta i$, et, sur une deuxième entrée négative les valeurs échantillonnées du signal $\Delta j$. Les sommateurs 15 et 16 délivrent respectivement les composantes $\Sigma i$ et $\varepsilon j$ du vecteur $\vec{\varepsilon}$.

Le vecteur $\vec{V}$ de composantes $Vi_K$, $Vj_K$ est tel que $Vi_K=(\rho1\rho2)$ Cos $\varphi$ et $Vj_K=(\rho1\rho2)$ Sin $\varphi$ où $\rho1$ et $\rho2$ sont les modules des vecteurs $\vec{\Sigma}$ et $\vec{\varepsilon}$.

Les composantes $Vi_K$ $Vj_K$ peuvent également s'écrire:

$$Vi_K = \vec{\Sigma} \cdot \vec{\varepsilon} = \Sigma i\, \varepsilon i + \Sigma j\, \varepsilon j$$

$$Vj_K = (\vec{\Sigma} \wedge \vec{\varepsilon}) \cdot \vec{n} = \Sigma i\, \varepsilon j - \Sigma j\, \varepsilon i$$

Les signaux représentatifs des composantes $\Sigma i$, $\varepsilon i$, $\varepsilon j$, $\Sigma j$ sont délivrés au circuit 12 de calcul du vecteur d'écartométrie $\vec{V}$. Le circuit 12 de calcul du vecteur d'écartométrie $\vec{V}$ comporte un multiplexeur analogique 17 permettant la transmission parallèle série des informations relatives aux composantes $\Sigma i$, $\varepsilon i$, $\varepsilon j$, $\Sigma j$ à un convertisseur analogique numérique 18. Le convertisseur analogique numérique 18 transmet, après codage en signaux numériques, les valeurs des composantes des vecteurs $\vec{\varepsilon}$ et $\vec{\Sigma}$ à un filtre Doppler 19. Les circuits convertisseurs analogiques 18 et le circuit de filtrage 19 Doppler sont de préférence les circuits utilisés dans la fonction veille du radar, le codage et le traitement Doppler des 4 composantes $\Sigma i$, $\Sigma j$, $\varepsilon i$, $\varepsilon j$ étant alors effectué en fin de récurrence d'émission du radar par ces circuits de la fonction veille. Les signaux délivrés par le filtre Doppler sont eux-mêmes transmis à un démultiplexeur numérique 20 délivrant les signaux $\Sigma i$, $\varepsilon i$, $\Sigma j$, $\varepsilon j$ à un circuit opératuer spécialisé 21. Le multiplexeur analogique 17 et le démultiplexeur numérique 20 ne seront pas décrits en tant qu'éléments bien connus de la technique par l'homme de l'art.

Un mode de réalisation non limitatif de l'opérateur spécialisé 21 est représenté figure 3. A ce titre, l'opérateur spécialisé 21 comporte 4 multiplicateurs 22, 23, 24, 25 recevant respectivement les signaux représentatifs des composantes $\varepsilon i$, $\Sigma j$; $\Sigma j$, $\varepsilon j$; $\varepsilon j$, $\Sigma i$; $\Sigma i$, $\varepsilon i$. Ces multiplicateurs délivrent respectivement les produits des composantes $\varepsilon i$, $\Sigma j$; $\Sigma j$ $\varepsilon j$; $\Sigma i$ $\varepsilon j$; $\Sigma i$ $\varepsilon i$. Les signaux représentatifs des produits $\varepsilon i \cdot \Sigma j$ et $\Sigma i \cdot \varepsilon j$ sont délivrés à un premier sommateur 26 respectivement sur une entrée négative et une entrée positive de ce dernier. Les signaux représentatifs des produits $\varepsilon j \cdot \Sigma j$ et $\varepsilon i \cdot \Sigma i$ sont délivrés respectivement à une première et une deuxième entrée positive d'un deuxième sommateur 27. Les sommateurs 26 et 27 délivrent respectivement les composantes $Vj_K$, $Vi_K$ du vecteur d'écartométrie $\vec{V}$. Le mode de réalisation de la figure 3 ne préjuge pas de tout mode de réalisation séquentiel dans lequel un nombre inférieur de multiplicateurs est utilisé pour l'obtention des produits des composantes deux à deux ni du nombre de sommateurs utilisé pour l'obtention des composantes $Vi_K$ $Vj_K$. Les moyens d'intégration 13 sur N récurrence des composantes $Vi_K$ $Vj_K$ du vecteur $\vec{V}$ sont constitués par exemple par un intégrateur numérique pour lequel le nombre N est prédéterminé. Ce nombre N est lié à la bande passante de la boucle de poursuite du radar. A titre d'exemple non limitatif, ce nombre N est choisi égal ou supérieur à 20, la valeur de N lorsque N est supérieur à 20, influant peu sur les performances du système pour un rapport signal à bruit donné et pour un pas de codage déterminé pour lequel le bit de poids le moins élevé est égal à la valeur efficace du bruit. Les moyens de calcul du signal d'écartométrie utile rapport des composantes du vecteur $\vec{W}$ tel que

$$\vec{\varepsilon} = \frac{Wj}{Wi}$$

peut être constitué par tout système de calcul numérique et en particulier par le calculateur du radar lequel est susceptible d'effectuer les calculs avec la précision souhaitée.

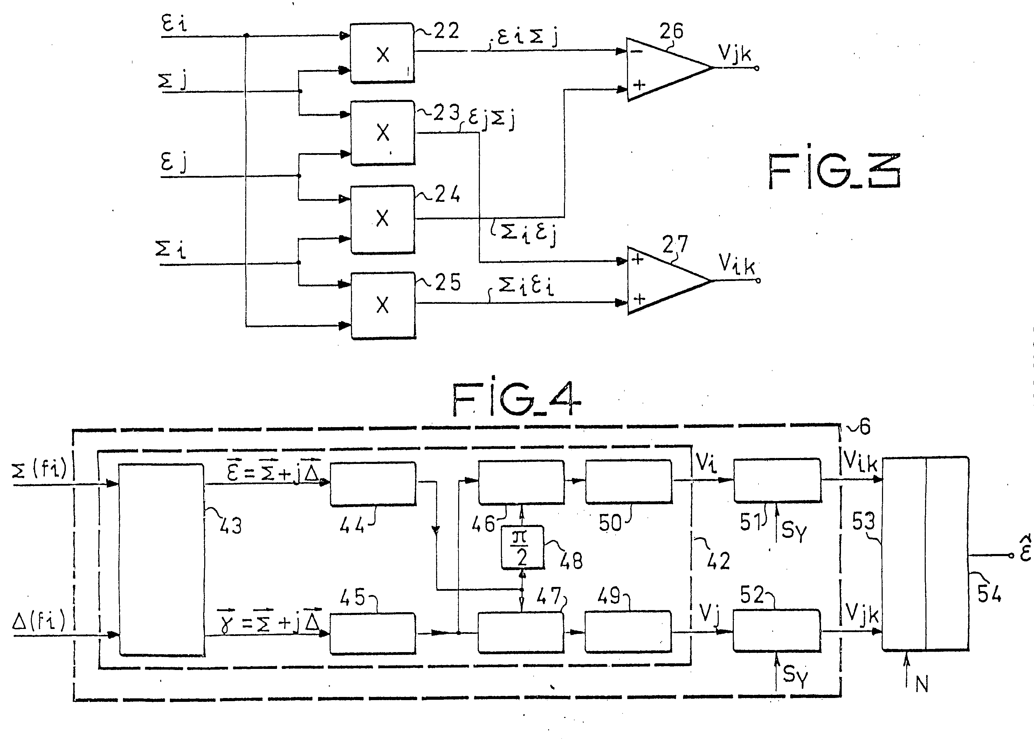

Selon un mode de réalisation non limitatif de l'invention représenté figure 4, le dispositif de traitement de signaux d'écartométrie angulaire d'un radar monopulse permet un traitement des signaux dans le cas d'une combinaison linéaire des vecteurs $\vec{\Sigma}$ et $\vec{\Delta}$ pour laquelle les nombres p et q ont pour valeur respective $-1$ et $+1$. Le dispositif représenté figure 4 permet ce traitement par la mise en oeuvre de circuits de traitement analogique, les vecteurs $\vec{\gamma}$ et $\vec{\varepsilon}$ étant respectivement définis par les relations $\vec{\gamma} = \vec{\Sigma} - j\vec{\Delta}$ et $\vec{\varepsilon} = \vec{\Sigma} + j\vec{\Delta}$. Les moyens de calcul 6 pour chaque récurrence d'ordre K des composantes $Vi_K$ et $Vj_K$ du vecteur d'écartométrie $\vec{V}$ comprennent, d'une part, pour le calcul des composantes $Vi_K$ des moyens de calcul analogique du produit scalaire des vecteurs $\vec{\gamma}$ et $\vec{\varepsilon}$ et d'autre part pour le calcul des composantes $Vj_K$ des moyens de calcul analogique du produit mixte $Vj_K = (\vec{\gamma} \wedge \vec{\varepsilon}) \cdot \vec{n}$.

Les moyens de calcul analogique délivrent respectivement des signaux représentatifs des composantes $Vi = \cos \varphi$ et $Vj \sin \varphi$ où $\varphi$ représente le déphasage, dans le plan complexe C, entre les vecteurs $\vec{\varepsilon}$ et $\vec{\gamma}$. Les moyens de calcul pour chaque récurrence d'ordre K des composantes $Vi_K$, $Vj_K$ dur vecteur d'écartométrie $\vec{V}$ comprennent en outre en sortie des moyens de calcul analogique des circuits échantillonneurs 51, 52 pour chaque récurrence d'ordre K des signaux représentatifs des composantes Vi et Vj du vecteur d'écartométrie $\vec{V}$. Ces circuits échantillonneurs délivrent pour chaque récurrence d'ordre K les composantes $Vi_K$, $Vj_K$ du vecteur d'écartométrie $\vec{V}$. Les moyens de calcul analogique 42 du produit scalaire des vecteurs $\vec{\gamma}$ et $\vec{\varepsilon}$ comportent un circuit opérateur 43 recevant les signaux à fréquence intermédiaire $\Sigma$ (fi) et $\Delta$ (fi) et délivrant sur deux voies de sortie les signaux représentatifs des vecteurs $\vec{\varepsilon} = \vec{\Sigma} + j\vec{\Delta}$ et $\vec{\gamma} = \vec{\varepsilon} - j\vec{\Delta}$. Les signaux représentatifs des vecteurs $\vec{\gamma}$ et $\vec{\varepsilon}$ sont délivrés par l'intermédiaire d'un circuit limiteur d'amplitude 44 et 45 à un premier et à un deuxième détecteur amplitude de phase 46 et 47 recevant directement et par l'intermédiaire d'un déphaseur relatif de

$$\frac{\pi}{2}$$

les signaux délivrés par chaque limiteur d'amplitude. Chaque démodulateur amplitude phase 46, 47 délivre respectivement un signal Vi, Vj représentatif du Cos et du Sin de la phase $\varphi$ des vecterus $\vec{\varepsilon}$ et $\vec{\gamma}$ tel que Vi=Cos $\varphi$ et Vj=Sin $\varphi$. Les limiteurs d'amplitude 44 et 45 permettent de délivrer des signaux d'amplitude normée par définition égale à l'unité, les détecteurs amplitude phase délivrant de ce fait des signaux représentatifs du Cos et du Sin de la phase des vecteurs $\vec{\gamma}$ et $\vec{\varepsilon}$.

Les détecteurs amplitude phase 47 et 46 délivrent à leur sortie un signal proportionnel au produit scalaire des vecteurs $\vec{\gamma}$ et $\vec{\varepsilon}$ d'amplitude unitaire et au produit scalaire des vecteurs $\vec{\gamma}$ et $\vec{\varepsilon'}$ où $\vec{\varepsilon'}$ est le vecteur dans le plan complexe obtenu par rotation de

$$\frac{\pi}{2}$$

à partir du vecteur $\vec{\varepsilon}$ (Fig. 1$b$). Il est aisé de démontrer que le produit scalaire du vecteur $\vec{\gamma}$ et du vecteur $\vec{\varepsilon'}$ n'est autre que la mesure du produit mixte des vecteurs $\vec{\gamma}$, $\vec{\varepsilon}$, $\vec{n}$ d'amplitude unitaire représentés figure 1$b$. Les détecteurs amplitude phase 47 et 46 délivrent donc respectivement les composantes Vj et Vi du vecteur d'écartométrie $\vec{V}$, lesquelles composantes Vi et Vj sont proportionnelles respectivement au sinus et au cosinus de l'angle $\varphi$ entre les vecteurs $\vec{\gamma}$ et $\vec{\varepsilon}$. Les composantes Vi et Vj du vecteur d'écartométrie $\vec{V}$ sont délivrées en sortie des moyens de calcul de ce vecteur d'écartométrie par l'intermédiaire de filtres passe-bas 50 et 49. Les composantes $Vi_K$ et $Vj_K$ du vecteur d'écartométrie $\vec{V}$ sont délivrées à un circuit intégrateur 53 permettant, à partir d'une prédétermination du nombre N et du temps d'intégration correspondant, l'intégration séparée des composantes $Vi_K$ et $Vj_K$ par l'intermédiaire de circuits échantillonneurs 51 et 52 recevant respectivement un signal de commande d'échantillonnage référencé Sy ainsi qu'il a été décrit précédemment pour les figures 2 et 3. Le circuit d'intégration 53 délivre les composantes des vecteurs Wi, Wj à un circuit 54 de calcul du rapport de ces composantes. Le circuit intégrateur 53 et le circuit de calcul du rapport des composantes Wi et Wj 54 travaillant à une fréquence

$$\frac{FR}{N},$$

où FR est la fréquence de récurrence d'émission du radar, peuvent être constitués par tout intégrateur et tout moyen de calcul analogique approprié, permettant un traitement à cette fréquence. Le circuit opérateur de combinaison linéaire des vecteurs $\vec{\Sigma}$ et $\vec{\Delta}$ peut être constitué par tout circuit connu de l'homme de l'art susceptible de délivrer la somme et la différence de deux ondes porteuses en phase et en quadrature de phase. En particulier ce circuit opérateur peut être constitué par les circuits décrits dans la demande de brevet français au nom de la demanderesse numéro 77 19617/2.396.311. On a ainsi décrit un dispositif de traitement de signaux d'écartométrie angulaire particulièrement adapté au traitement des signaux d'un radar monopulse de poursuite continue.

Las solution de traitement numérique présente par rapport à la solution de traitement analogique l'avantage de la possibilité du filtrage Doppler du signal et de ce fait l'élimination directe des échos fixes.

Un tel dispositif selon l'invention peut également être utilisé, notamment dans le cas de la solution numérique, dans le cas d'un système radar de poursuite sur information discontinue dans lequel l'antenne est en permanence en balayage à vitesse angulaire uniforme et dans lequel l'information écartométrie gisement est prélevée lors de la coïncidence de la direction de l'axe de l'antenne et de la direction de la cible pendant le passage de l'antenne dans un créneau de sélection encadrant un gisement modèle de référence. De ce fait le signal différence varie constamment pendant cette mesure. Dans ce cas le nombre N de récurrences pendant lesquelles le circuit intégrateur 13 (ou 53) effectue l'intégration des composantes $Vi_K$ et $Vj_K$ du vecteur d'écartométrie s'effectue pendant le temps de passage du faisceau d'antenne sur le cible. Le nombre N est alors donné par la relation

$$N = FR \times \frac{\theta}{\Omega}$$

où $\theta$ est l'angle d'ouverture de faisceau d'antenne, FR la fréquence de répétition d'émission ou fréquence de récurrence d'émission du radar et $\Omega$ la vitesse de rotation de l'antenne. Le nombre N étant déterminé tel que précédemment le fonctionnement du dispositif est alors identique à celui du cas de la poursuite contenue.

**Revendications**

1. Dispositif de traitement de signaux d'écartométrie angulaire d'un radar monopulse délivrant au moins, en fonctionnement, à fréquence intermédiaire, un signal somme $\Sigma$ (fi) et un signal différence $\Delta$ (fi) dont la phase relative définit dans le plan complexe des vecteurs somme $\vec{\Sigma}$ et différence $\vec{\Delta}$ porteurs de l'information d'écartométrie, caractérisé en ce qu'il comporte:

— des moyens de calcul (12; 21; 22a' 27; 43 à 50), pour chaque récurrence d'ordre K, des composantes $Vi_K$, $Vj_K$ dans le plan complexe d'un vecteur d'écartométrie $\vec{V}$ telles que $Vi_K = \vec{\gamma} \cdot \vec{\varepsilon}$ et $Vj_K = (\vec{\gamma} \wedge \vec{\varepsilon}) \cdot \vec{n}$, respectivement

produit scalaire et produit mixte des vecteurs $\vec{\gamma}$, $\vec{\varepsilon}$ et $\vec{n}$, dans lesquels $\vec{\gamma}$ est un vecteur obtenu par combinaison linéaire des vecteurs $\vec{\Sigma}$ et $\vec{\Delta}$, $\vec{\gamma}=\vec{\Sigma}+jp\vec{\Delta}$, $\vec{\varepsilon}$ est un vecteur obtenu par combinaison linéaire des vecteurs $\vec{\Sigma}$ et $\vec{\Delta}$, $\vec{\varepsilon}=\vec{\Sigma}+jq\vec{\Delta}$, les nombres p et q étant des nombres réels avec p≠q, $\vec{n}$ un vecteur unitaire orthogonal au plan $(\vec{\gamma}, \vec{\varepsilon})$ et j l'opérateur de rotation de

$$\frac{\pi}{2}$$

dans le plan complexe, la phase relative des vecteurs $\vec{\gamma}$ et $\vec{\varepsilon}$ étant représentative, dans ce plan, de l'information d'écartométrie;

— des moyens d'intégration (13; 53) sur N récurrences des composantes $Vi_K$ et $Vj_K$ du vecteur V délivrant les composantes Wi, Wj d'un vecteur $\vec{W}$ dont la phase $\phi$ dans le plan complexe est représentative de l'information utile d'écartométrie tel que:

$$Wi = \sum_{K=1}^{N} Vi_K, \qquad Wj = \sum_{K=1}^{N} Vj_K$$

— des moyens de calcul (14; 54) d'un signal d'écartométrie utile $\hat{\varepsilon}$ rapport des composantes du vecteur $\vec{W}$ tel que:

$$\hat{\varepsilon} = \frac{Wj}{Wi}$$

2. Dispositif de traitement de signaux d'écartométrie angulaire d'un radar monopulse selon la revendication 1, caractérisé en ce que les nombres p et q ont pour valeur respective 0 et 1, les vecteurs $\vec{\varepsilon}$ et $\vec{\gamma}$ étant définis respectivement par les relations:

$$\vec{\gamma} = \vec{\Sigma}$$

$$\vec{\varepsilon} = \vec{\Sigma} + j\vec{\Delta}$$

3. Dispositif de traitement de signaux d'écartométrie angulaire d'un radar selon les revendications 1 à 2, caractérisé en ce qu'il comporte:

— des moyens de démodulation (1 à 5) en phase et en quadrature de phase des signaux à fréquence intermédiaire $\Sigma$ (fi) et $\Delta$ fi délivrant respectivement des signaux vidéo fréquence démodulés en phase $\Sigma i$, $\Delta i$ et des signaux vidéo fréquence démodulés en quadrature de phase $\Sigma j$, $\Delta j$, les signaux $\Sigma i$, $\Sigma j$, et $\Delta i$, $\Delta j$ définissant dans le plan complexe respectivement des vecteurs $\vec{\Sigma}$ de composantes ($\Sigma i$, $\Sigma j$) et $\vec{\Delta}$ de composantes ($\Delta i$, $\Delta j$), les moyens de calcul pour chaque récurrence d'ordre K, des composantes $Vi_K$, $Vj_K$

dans le plan complexe d'un vecteur d'écartométrie $\vec{V}$ telles que $Vi_K = \vec{\gamma} \cdot \vec{\varepsilon}$ et $Vj_K = (\vec{\gamma} \wedge \vec{\varepsilon}) \cdot \vec{n}$ où $Vj_K$ est le produit mixte des vecteurs $\vec{\gamma}$, $\vec{\varepsilon}$ et $\vec{n}$ comportant en cascade:

— un opérateur de combinaison linéaire des vecteurs $\vec{\Sigma}$ et $\vec{\Delta}$ délivrant les signaux représentatifs des vecteurs $\vec{\gamma}$ et $\vec{\varepsilon}$;
— un circuit de calcul des composantes Vi, Vj du vecteur d'écartométrie V.

4. Dispositif de traitement de signaux d'écartométrie angulaire d'un radar selon la revendication 3, caractérisé en ce que l'opérateur de combinaison linéaire des vecteurs $\vec{\Sigma}$ et $\vec{\Delta}$ délivrant les signaux représentatifs des vecteurs $\vec{\gamma}$ et $\vec{\varepsilon}$ comporte en cascade:

— des moyens d'échantillonage (7 à 10) pour chaque récurrence des signaux vidéo fréquence démodulés en phase $\Sigma i$, $\Delta i$ et des signaux vidéo fréquence démodulés en quadrature de phase $\Sigma j$, $\Delta j$, les moyens échantillonnages recevant, en fonctionnement, sur une entrée de commande d'échantillonnage un signal de commande (Sy) synchrone de la fenêtre de poursuite délivrée par la boucle de poursuite du radar;
— des moyens de calcul analogique (11) pour chaque récurrence des composantes $\varepsilon i$, $\varepsilon j$ du vecteur $\vec{\varepsilon} = \vec{\Sigma} + j\vec{\Delta}$, les composantes $\varepsilon i$, $\varepsilon j$ du vecteur $\vec{\varepsilon}$ étant respectivement égales à $\varepsilon i = \Sigma i - \Delta j$; $\varepsilon j = \Sigma j + \Delta i$.

5. Dispositif de traitement de signaux d'écartométrie angulaire d'un radar selon la revendication 4, caractérisé en ce que les moynes de calcul analogique comportent un premier et un deuxième sommateur (15, 16), recevant, d'une part, sur une première entrée positive le signal $\Sigma i$ et sur une deuxième entrée négative le signal $\Delta j$, et, d'autre part, sur une première entrée positive le signal $\Delta i$ et sur une deuxième entrée positive le signal $\Sigma j$, les sommateurs délivrant respectivement les composantes $\varepsilon 1$ et $\varepsilon j$ du vecteur $\vec{\varepsilon}$.

6. Dispositif de traitement de signaux d'écartométrie angulaire d'un radar selon la revendication 3, caractérisé en ce que le circuit de calcul des composantes $Vi_K$ et $Vj_K$ du vecteur d'écartométrie $\vec{V}$ comporte en cascade:

— des moyens de codage analogique numérique et de traitement Doppler (17 à 19) recevant les signaux représentatifs des composantes $\Sigma i$, $\Sigma j$; $\varepsilon i$, $\varepsilon j$;
— des moyens de calcul numérique (21; 22 à 27) pour chaque récurrence d'émission d'un vecteur $\vec{V}$ de composantes

$$Vi_K = \Sigma i\ \varepsilon i + \vec{\Sigma} j\ \varepsilon j$$

$$Vj_K = \Sigma i\ \varepsilon j - \Sigma j\ \varepsilon i$$

7. Dispositif de traitement des signaux d'écartométrie angulaire d'un radar selon la revendication 6, caractérisé en ce que les moyens de codage analogique numérique et de traitement Doppler comportent en cascade un multiplexeur analogique (17) et un convertisseur analogique numérique (18).

8. Dispositif de traitement de signaux d'écartométrie angulaire d'un radar selon la revendication 6, caractérisé en ce que les moyens de calcul numérique pour chaque récurrence d'émission d'un vecteur $\vec{V}$ de composantes:

$$Vi_K = \Sigma i \; \varepsilon i + \varepsilon j \; \Sigma j$$

$$Vj_K = \Sigma i \; \varepsilon j - \Sigma j \; \varepsilon i$$

comportent en cascade: un démultiplexeur (20) et un opérateur spécialisé, l'opérateur spécialisé comportant un premier circuit multiplicateur (22) recevant les composantes codées $\varepsilon i$, $\Sigma j$, un deuxième multiplicateur (23) recevant les composantes codées $\Sigma j$, $\varepsilon j$, un troisième circuit multiplicateur (24) recevant les composantes codées $\varepsilon j$, $\Sigma i$ et un quatrième circuit multiplicateur (25) recevant les composantes codées $\varepsilon i$, $\Sigma i$, chaque multiplicateur délivrant respectivement les produits élémentaires $\varepsilon i \; \Sigma j$, $\Sigma j \; \varepsilon j$, $\Sigma i \; \varepsilon j$, $\Sigma i \; \varepsilon i$ ledit opérateur spécialisé comprenant en outre d'une part, un premier circuit sommateur (26) recevant sur une première entrée positive, le produit élémentaire $\Sigma i \; \varepsilon j$ et sur une deuxième entrée négative, le produit élémentaire $\varepsilon i \; \Sigma j$, le premier circuit sommateur délivrant les composantes $Vj_K$ du vecteur $\vec{V}$ telle que $Vj_K = \Sigma i \; \varepsilon j - \varepsilon i \; \Sigma j$, et, d'autre part, un deuxième circuit sommateur (27) recevant sur une première entrée positive le produit élémentaire $\varepsilon i \; \Sigma i$ et sur une deuxième entrée positive le produit élémentaire $\Sigma j \; \varepsilon j$, le deuxième circuit sommateur délivrant le composante $Vi_K$ du vecteur $\vec{V}$ telle que $Vi_K = \Sigma j \; \varepsilon j + \Sigma i \; \varepsilon i$.

9. Dispositif de traitement de signaux d'écartométrie angulaire d'un radar monopulse selon la revendication 1, caractérisé en ce que les nombres p et q ont pour valeur respective $-1$ et $+1$ les vecteurs $\vec{\gamma}$ et $\vec{\varepsilon}$ étant définis respectivement par les relations

$$\vec{\gamma} = \vec{\Sigma} - j\vec{\Delta}$$

$$\vec{\varepsilon} = \vec{\Sigma} + j\vec{\Delta}$$

les moyens de calcul (43 à 50) pour chaque récurrence d'ordre K des composantes $Vi_K$, $Vj_K$ du vecteur d'écartométrie $\vec{V}$ comprenant d'une part, pour le calcul des composantes $Vi_K$, des moyens de calcul analogique du produit scalaire des vecteurs $\vec{\gamma}$ et $\vec{\varepsilon}$, $Vi_K = \vec{\gamma} \cdot \vec{\varepsilon}$, et d'autre part pour le calcul des composantes $Vj_K$, des moyens de calcul analogique du produit mixte $Vj_K = (\vec{\gamma} \wedge \vec{\varepsilon}) \cdot \vec{n}$, les moyens de calcul analogique délivrant respectivement des signaux représentatifs des composantes $Vi = Cos \; \varphi$ et $Vj = Sin \; \varphi$ où $\varphi$ représente le déphasage dans le plan complexe entre les vecteurs $\vec{\gamma}$ et $\vec{\varepsilon}$, les moyens

de calcul pour chaque récurrence d'ordre K des composantes $Vi_K$ $Vj_K$ du vecteur d'écartométrie $\vec{V}$ comprenant en outre en sortie des moyens de calcul analogique (54), des circuits échantillonneurs (51, 52) pour chaque récurrence d'ordre K des signaux représentatifs des composantes $Vi$, $Vj$ du vecteur d'écartométrie $\vec{V}$ délivrant pour chaque récurrence d'ordre K les composantes $Vi_K$ $Vj_K$ du vecteur d'écartométrie $\vec{V}$.

10. Dispositif de traitement des signaux d'écartométrie angulaire d'un radar monopulse selon la revendication 9, caractérisé en ce que les moyens de calcul (43 à 50) comportent un circuit opérateur (43) recevant les signaux à fréquence intermédiaire $\Sigma$ (fi) et $\Delta$ (fi) et délivrant sur deux voies de sortie les signaux représentatifs des vecteurs $\vec{\varepsilon} = \vec{\Sigma} + j\vec{\Delta}$ et $\vec{\gamma} = \vec{\Sigma} - j\vec{\Delta}$, et sur chaque voie de sortie du circuit opérateur respectivement, un circuit limiteur d'amplitude (44, 45), les moyens de calcul comportant en outre un premier et un deuxième détecteur amplitude phase (46, 47) recevant respectivement directement et par l'intermédiaire d'un déphaseur relatif de

$$\frac{\pi}{2}$$

les signaux délivrés par chaque limiteur, chaque démodulateur amplitude phase délivrant respectivement un signal $Vi$, $Vj$ représentatif du Cosinus et du Sinus de la phase des vecteurs $\vec{\gamma}$ et $\vec{\varepsilon}$, tels que $Vi = Cos \; \varphi$ et $Vj = Sin \; \varphi$.

11. Radar monopulse comportant un dispositif de traitement des signaux d'écartométrie selon l'une des revendications 1 à 10.

**Patentansprüche**

1. Vorrichtung zur Verarbeitung von Winkel-abstandsmessungs-Signalen eines Zwischen-frequenzbetrieb wenigstens ein Summensignal $\Sigma$ (fi) und ein Differenzsignal $\Delta$ (fi) abgebenden Monopuls-Radar, wobei die relative Phase dieser Signale in er komplexen Ebene die Winkelabstands-Information tragende Summen-bzw. Differenzvektoren $\vec{\Sigma}$ bzw. $\vec{\Delta}$ bestimmt, dadurch gekennzeichnet, dass sie folgende Elemente aufweist:

— Rechnenmittel (12; 21; 22 bis 27; 43 bis 50) zur Berechnung, für jede Wiederholung der Ordnund K, der Komponenten $Vi_K$, $Vj_K$ in der komplexen Ebene eines Winkelabstandvektores $\vec{V}$, derart dass $Vi_K = \vec{\gamma}$, $\vec{\varepsilon}$ und $Vj_K = (\vec{\gamma} \wedge \vec{\varepsilon}) \cdot \vec{n}$, die ein skalares bzw. ein gemischtes Produkt der Vektoren $\vec{\gamma}$, $\vec{\varepsilon}$ und $\vec{n}$ sind, wobei $\vec{\gamma}$ ein durch Linearkombination der Vektoren $\vec{\Sigma}$ und $\vec{\Delta}$ erhaltener Vektor ist, $\vec{\gamma} = \vec{\Sigma} + jp\vec{\Delta}$, $\vec{\varepsilon}$ ein durch Linearkombination der Vektoren $\vec{\Sigma}$ und $\vec{\Delta}$ erhaltener Vektor ist, wo $\vec{\varepsilon} = \vec{\Sigma} + jq\vec{\Delta}$, wobei die Zahlen p und q reelle Zahlen mit p≠q, $\vec{n}$ ein zur Ebene $(\vec{\gamma}, \vec{\varepsilon})$ orthogonaler Einheitsvektor und j der

$$\frac{\pi}{2} =$$

Rotationsoperator, und wobei die relative Phase der Vektoren $\vec{\gamma}$ und $\vec{\varepsilon}$ in dieser Ebene die Winkelabstands-Information darstellen;

— Integrationsmittel (13; 53) für N-maliges Auftreten der Komponenten $Vi_K$ et $Vj_K$ des Vektors $\vec{V}$, welche die Komponenten Wi und Wj eines Vektors $\vec{W}$ liefern, dessen Phase $\phi$ in der komplexen Ebene die effektive Winkelabstands-Information darstellt, derart dass:

$$Wi = \sum_{K=1}^{N} Vi_K, \qquad Wj = \sum_{K=1}^{N} Vj_K$$

— Rechnenmittel (14; 54) zum Berechnen eines effecktiven Winkelabstandsmessungs-Signals $\hat{\varepsilon}$ in Abhängigkeit von der Komponenten des Vektors $\vec{W}$, derart dass:

$$\hat{\varepsilon} = \frac{Wj}{Wi}$$

2. Vorrichtung zur Verarbeitung von Winkelabstandsmessungs-Signalen eines Monipuls-Radars nach Anspruch 1, dadurch gekennzeichnet, dass die Zahlen p und q die Werte 0 bis 1 haben, wobei die Vektoren $\vec{\varepsilon}$ und $\vec{\gamma}$ jeweils durch die Formeln

$$\vec{\gamma} = \vec{\Sigma}$$

$$\vec{\varepsilon} = \vec{\Sigma} + j\vec{\Delta}$$

definiert sind.

3. Vorrichtung zur Verarbeitung von Winkelabstandsmessungs-Signalen eines Monipuls-Radars nach Anspruch 1 oder 2, dadurch gekennzeichnet, dass sie folgende Elemente aufweist:

— Demodulationsmittel (1 bis 5) in Phase und Phasenquadratur der Zwischenfrequenzsignale $\Sigma$ (fi) und $\Delta$ (fi), welche phasenmodulierte Videofrequenzsignale $\Sigma i$, $\Delta i$ und phasenquadraturmodulierte Videofrequenzsignale $\Sigma j$, $\Delta j$ abgeben, wobei die Signale $\Sigma i$, $\Sigma j$ und $\Delta i$, $\Delta j$ in der komplexen Ebene jeweils Vektoren $\vec{\Sigma}$ mit Komponenten ($\Sigma i$, $\Sigma j$) und $\vec{\Delta}$ mit Komponenten ($\Delta i$, $\Delta j$) liefern, und wobei die Rechnenmittel für jedes Auftreten der Ordnung K, zum Berechnen der Komponenten $Vi_K$ und $Vj_K$ eines Winkelabstandsvektors $\vec{V}$ in der komplexen Ebene derart ausgelegt sind, dass $Vi_K = \vec{\gamma} \cdot \vec{\varepsilon}$ und $Vj_K = (\vec{\gamma} \wedge \vec{\varepsilon}) \cdot \vec{n}$ ist, und wobei $Vj_K$ das gemischte Produkt der Vektoren $\vec{\gamma}$, $\vec{\varepsilon}$ und $\vec{n}$ ist, das in Kaskadenanordnung folgende Elemente aufweist:

— einen Linearkombinations-Operator der Vektoren $\vec{\Sigma}$ und $\vec{\Delta}$, welche die die Vektoren $\vec{\gamma}$ und $\vec{\varepsilon}$ darstellende Signale liefert;

— eine Rechenschaltung der Komponenten Vi, Vj des Winkelabstands-vektors $\vec{V}$.

4. Vorrichtung zur Verarbeitung von Winkelabstandsmessungs-Signalen eines Radars nach Anspruch 3, dadurch gekennzeichnet, dass der Linearkombinations-Operator der Vektoren $\vec{\Sigma}$ und $\vec{\Delta}$, welcher die Vektoren $\vec{\gamma}$ und $\vec{\varepsilon}$ darstellende Signale liefert, in folgende Elemente aufweist:

— Musterungsmittel (7 bis 10) für jedes Auftreten der phasendemodulierten Videofrequenzsignale $\Sigma i$, $\Delta i$ und der phasenquadraturdemodulierten Videofrequenzsignale $\Sigma j$, $\Delta j$, wobei die Musterungsmittel im Betrieb auf einen Musterungssteuereingang ein Steuersignal (Sy) erhalten, das synchron mit dem Folgefenster ist, das von der Radar-Folgeschleife geliefert ist;

— Analogrechenmittel (11) für jedes Auftreten der Komponenten $\varepsilon i$, $\varepsilon j$ des Vektors $\vec{\gamma} = \vec{\Sigma} + j\vec{\Delta}$, wobei die Komponenten $\varepsilon i$, $\varepsilon j$ des Vektors $\vec{\varepsilon}$ jeweils gleich $\varepsilon i = \Sigma i - \Delta j$; $\varepsilon j = \Sigma j + \Delta i$ sind.

5. Vorrichtung zur Verarbeitung von Winkelabstandsmessungssignalen eines Radars nach Anspruch 4, dadurch gekennzeichnet, dass die Analogrechenmittel einen ersten und zweiten Summierer (15, 16) aufweisen, welche einerseits an einem ersten positiven Eingang das Signal $\Sigma i$ und an einem zweiten negativen Eingang das Signal $\Delta j$ empfangen und andererseits an einem ersten positiven Eingang das Signal $\Sigma i$ und an einem zweiten positiven Eingang das Signal $\Delta j$ empfangen, wobei die Summierer jeweils die Komponenten $\varepsilon i$ und $\varepsilon j$ des Vektors $\vec{\varepsilon}$ liefern.

6. Vorrichtung zur Verarbeitung von Winkelabstandsmessungs-Signalen eines Radars nach Anspruch 3, dadurch gekennzeichnet, dass die Rechnenschaltung der Komponenten $Vi_K$ und $Vj_K$ des Winkelabstandsvektors $\vec{V}$ in Kaskadenanordnung folgende Elemente aufweist:

— analog-numerische Kodierungsmittel und Doppler-Verarbeitungsmittel (17 bis 19), welche die die Komponenten $\Sigma i$, $\Sigma j$, $\varepsilon i$, $\varepsilon j$ darstellenden Signale empfangen;

— numerische Rechnenmittel (21; 22 bis 27) für jedes Auftreten der Abgabe eines Vektors $\vec{V}$ mit den Komponenten

$$Vi_K = \Sigma i\ \varepsilon i + \Sigma j\ \varepsilon j$$

$$Vj_K = \Sigma i\ \varepsilon j - \Sigma j\ \varepsilon i$$

7. Vorrichtung zur Verarbeitagung von Winkelabstandsmessungs-Signalen eines Radars nach Anspruch 6, dadurch gekennzeichnet, dass die analogen-nurischen Rechnenmittel und Dopplerverarbeitungsmittel in Kaskadenanordnung einen analogen Multiplexer (17) un einen Analog-numerischen Umwandler (18) aufweisen.

8. Vorrichtung zur Verarbeitung von Winkelabstandsmessungs-Signalen eines Radars nach Anspruch 6, dadurch gekennzeichnet, dass die numerischen Rechnenmittel für jedes Auftreten der Abgage Vektors $\vec{V}$ mit den Komponenten:

$$Vi_K = \Sigma i\ \varepsilon i + \Sigma j\ \varepsilon j$$

$$Vj_K = \Sigma i\ \varepsilon j - \Sigma j\ \varepsilon i$$

in Kaskadenanordnung folgende Elemente aufweist: einen Demultiplexer (20) und einen spezialisierten Operator (21), wobei der spezialisierte Operator folgende Elemente aufweist: eine erste Multiplikationsschaltung (22), welche die kodierten Komponenten $\varepsilon i$, $\Sigma j$ empfängt, einen zweiten Multiplizierer (23), der die kodierten Komponenten $\Sigma j$, $\varepsilon j$ empfängt, eine dritte Multiplikationsschaltung (24), der die kodierten Komponenten $\varepsilon j$, $\Sigma i$ empfängt une eine vierte Multiplikationsschaltung, die die kodierten Komponenten $\varepsilon i$, $\varepsilon i$ empfängt, wobei jeder Multiplizierer jeweils die elementaren Produkte $\varepsilon i\ \Sigma j$, $\Sigma j\ \varepsilon j$, $\Sigma i\ \varepsilon j$, $\Sigma i\ \varepsilon i$ liefert, wobei die spezialisierte Schaltung ferner zwei Summierschaltungen aufweist, nämlich: einerseits eine erste Summierschaltung (26), die an einem ersten positiven Eingang das elementare Produkt $\Sigma i\ \varepsilon j$ und an einem zweiten negativen Eingang das elementare Produkt $\varepsilon i\ \Sigma j$ empfängt, wobei die erste Summierschaltung die Komponenten $Vj_K$ des Vektors $\vec{V}$ liefert, so dass $Vj_K = \Sigma i\ \varepsilon j - \varepsilon i\ \Sigma j$, une, andererseits, eine zweite Summierschalschaltung (27), welche an einem ersten positiven Eingang das elementare Produkt $\varepsilon i\ \Sigma i$ und auf einem zweiten positiven Eingang das elementare Produkt $\Sigma j\ \varepsilon j$ empfängt, wobei die zweite Summierschaltung die Komponente $Vi_K$ des Vektors liefert, derart dass $Vi_K = \Sigma j\ \varepsilon j + \Sigma i\ \varepsilon i$.

9. Vorrichtung zur Verarbeitung von Winkelabstandsmessungs-Signalen eines Monopuls-Radars nach Anspruch 1, dadurch gekennzeichnet, dass die Zahlen p und q die Werte $-1$ bzw. $+1$ haben und die Vektoren $\vec{\gamma}$ und $\vec{\varepsilon}$ jeweils durch folgende Formeln definiert sind:

$$\vec{\gamma} = \vec{\Sigma} - j\vec{\Delta}$$

$$\vec{\varepsilon} = \vec{\Sigma} + j\vec{\Delta}$$

wobei die Rechnenmittel für jedes Auftreten der Ordnung K der Komponenten $Vi_K$ und $Vj_K$ des Winkelabstandsvektors V folgende Mittel aufweisen: einerseits, zum Berechnen der Komponenten $Vi_K$, Analogrechnenmittel des skalaren Produktes der Vektoren $\vec{\gamma}$ und $\vec{\varepsilon}$, $Vi_K = \vec{\gamma} \cdot \vec{\varepsilon}$, und andererseits, zum Berechnen der Komponenten $Vj_K$, Analogrechnenmittel des gemischten Produktes $Vj_K = (\vec{\gamma} \wedge \vec{\varepsilon}) \cdot \vec{n}$, wobei die Analogrechnenmittel jeweils Signale liefern, die die Komponenten $Vi = \cos\phi$ und $Vj = \sin\phi$ darstellen, wobei $\phi$ in der komplexen Ebene die Phasenverschiebung zwischen den Vektoren $\vec{\gamma}$ und $\vec{\varepsilon}$ darstellt, wobei die Rechnenmitxel für jedes Auftreten der Ordnung K der Komponenten $Vi_K$ und $Vj_K$ des Winkelabstandsvektors $\vec{V}$ am Ausgang weiter folgende Mittel aufweist: Analogrechnenmittel (54), Musterungsschaltungen (51, 52) für jedes Auftreten der Ordnung· K der Signale, die die Komponenten Vi, Vj des Winkelabstandsvektors $\vec{V}$ darstellen, welche Mittel für jedes Auftreten der Ordnung K die Komponenten $Vi_K$, $Vj_K$ des Abstandsvektors $\vec{V}$ liefern.

10. Vorrichtung zur Verarbeitung von Winkelabstandsmessungs-Signalen eines Monopuls-Radars nach Anspruch 9, dadurch gekennzeichnet, dass die Rechnenmittel (43 bis 50) eine Operatorschaltung (43) aufweisen, welche die Mittelfrequenzsignale $\Sigma$ (fi) und $\Delta$ (fi) empfängt und auf zwei Ausgangswegen die die Vektoren $\vec{\varepsilon} = \vec{\Sigma} + j\vec{\Delta}$ und $\vec{\gamma} = \vec{\Sigma} - j\vec{\Delta}$ darstellenden Signale liefert, und dass sie auf jedem Ausgangsweg je eine Amplitudenbegrenzschaltung (44, 45) aufweisen, wobei die Rechnenmittel ferner einen ersten und einen zweiten Phasen-Amplituden-Fühler (46, 47) aufweisen, welche jeweils direkt und über einen relativen Phasenverschiebung um

$$\frac{\pi}{2}$$

die Signale empfangen, die von jedem Begrenzer geliefert werden, wobei jeder Phasen-Amplitude-Demodulator jeweils ein Signal Vi, Vj liefert, welches den Cosinus und Sinus der Phase der Vektoren $\vec{\gamma}$ und $\vec{\varepsilon}$ darstellt, derart dass $Vi = \cos\phi$ und $Vj = \sin\phi$.

11. Monopuls-Radar, mit einer Vorrichtung zur Verarbeitung der Winkelabstandsmessungs-Signalen nach Anspruch 1 bis 10

## Claims

1. A device for processing angular distance measuring signals issuing from a monopulse radar delivering at least, when functioning, at an intermediate frequency, a sum signal $\Sigma$ (fi) and a difference signal $\Delta$ (fi), the relative phase of which defines on the complex plane a sum vector $\vec{\Sigma}$ and a difference vector $\vec{\Delta}$ bearing the distance measuring data, characterized by the fact that it comprises:

— computing means (12, 21, 22 to 27, 43 to 50), for each recurrence of order K of the components $Vi_K$, $Vj_K$ on the complex plane of a distance measuring vector $\vec{V}$, such that $Vi_K = \vec{\gamma} \cdot \vec{\varepsilon}$ and $Vj_K = (\vec{\gamma} \wedge \vec{\varepsilon}) \cdot \vec{n}$, the scalar product and combined product respectively of vectors $\vec{\gamma}$, $\vec{\varepsilon}$ and n, where $\vec{\gamma}$ is a vector obtained by linear combination of vectors $\vec{\Sigma}$ and $\vec{\Delta}$, $\vec{\gamma} = \Sigma + jp\ \vec{\Delta}$, $\varepsilon$ is a vector obtained by linear combination of vectors $\vec{\Sigma}$ and $\vec{\Delta}$, $\vec{\varepsilon} = \vec{\Sigma} + jq\ \vec{\Delta}$, numbers p and q being real numbers with $p \neq q$, $\vec{n}$ is a unitary vector orthogonal to the plane $(\vec{\gamma}, \vec{\varepsilon})$ and j is the operator of rotation of $\pi/2$ on the complex plane, the relative phase of vectors $\vec{p}$ and $\vec{\varepsilon}$ being representative on this plane of the vertical reference data;

— means of integration (13, 53) for N recurrences of components $Vi_K$ and $Vj_K$ of vector V delivering components Wi, Wj of a vector $\vec{W}$, the phase $\phi$ of which on the complex plane is representative of the effective distance measuring signal, such that

$$Wi= \sum_{K=1}^{N} Vi_K, \qquad Wj= \sum_{K=1}^{N} Vj_K$$

— means (14, 54) of computing an effective distance measuring signal $\hat{\varepsilon}$ the ratio of the components of vector $\vec{W}$, such that $\vec{\varepsilon}=Wj/Wi$.

2. A device for processing angular distance measuring signals issuing from a monopulse radar as defined in claim 1, characterized by the fact that the numbers p and q are equal to 0 and 1 respectively, vectors $\vec{\varepsilon}$ and $\vec{p}$ being defined respectively by the equation $\vec{p}=\vec{\Sigma}$ and $\varepsilon=\vec{\Sigma}+j\vec{\Delta}$.

3. A device for processing angular distance measuring radar signals as defined in claims 1 and 2, characterized by the fact that it comprises:

— means (1 to 5) of phase and phase quadrature demodulation of the intermediate frequency signals $\Sigma$ (fi) and $\Delta$ (fi) delivering respectively phase-demodulated video frequency signals $\Sigma i$ and $\Delta i$, and phase-quadrature demodulated video frequency signals $\Sigma j$ and $\Delta j$, signals $\Sigma i$, $\Delta j$, and $\Sigma i$, $\Delta j$ defining on the complex plane vectors $\vec{\Sigma}$ with components ($\Sigma i$, $\Sigma j$) and $\vec{\Delta}$ with components ($\Delta i$, $\Delta j$) respectively, the computing means for each recurrence of order K of components $Vi_K$, $Vj_K$ on the complex plane of a distance measuring such $\vec{V}$ such that $ViK=\vec{p}\times\vec{\varepsilon}$ and $Vj_K=(\vec{p}\wedge\vec{\varepsilon})\cdot\vec{n}$, where $Vj_K$ is the combined product of vectors $\vec{p}$, $\vec{\varepsilon}$ and $\vec{n}$, comprising in cascade:

· a linear combination operator for vectors $\vec{\Sigma}$ and $\vec{\Delta}$ delivering signals representative of vectors $\vec{p}$ and $\vec{\varepsilon}$;

· a circuit to compute components Vi and Vj of the distance measuring vector V.

4. A device to process angular distance measuring radar signals as defined in claim 3, characterized by the fact that the linear combination operator for vectors $\vec{\Sigma}$ and $\vec{\Delta}$ delivering signals representative of vectors $\vec{p}$ and $\vec{\varepsilon}$ comprises in series:

— sampling means (7 to 10) for each recurrence of phase-demodulated video frequency signals $\Sigma i$, $\Delta i$ and phase-quadrature demodulated video frequency signals $\Sigma j$, $\Delta j$, these

sampling means receiving, when in operation, at one sampling control input a control signal (Sy) synchronous with the tracking window delivered by the radar tracking loop;

— analog computing means (11) for each recurrence of components $\varepsilon i$, $\varepsilon j$ of the vector $\vec{\varepsilon}=\vec{\Sigma}+j\vec{\Delta}$, components $\varepsilon i$, $\varepsilon j$ of the vector $\vec{\varepsilon}$ being respectively $\varepsilon i=\Sigma i-\Delta j$, and $\varepsilon j=\Sigma j+\Delta i$.

5. A device for processing angular distance measuring radar signals as defined in claim 4, characterized by the fact that the analog computing means comprise a first and second adder (15, 16) receiving, on the one hand, the signal $\Sigma i$ at one positive input and the signal $\Delta j$ at a second negative input and, on the other hand, the signal $\Delta i$ at one positive input and signal $\Sigma j$ at a second positive input, the adders delivering components $\varepsilon i$ and $\varepsilon j$ respectively of the vector $\vec{\varepsilon}$.

6. A device for processing angular distance measuring radar signals as defined in claim 3, characterized by the fact that the computing ciruit for components $Vi_K$ and $Vj_K$ of the vertical reference vector $\vec{V}$ comprises in cascade

— means for analog/digital coding and Doppler processing (17 to 19), receiving signals representative of components $\Sigma i$, $\Sigma j$ and $\varepsilon i$, $\varepsilon j$;

— digital computing means (21, 22 to 27) for each recurrent transmission of a vector $\vec{V}$ to calculate components $Vi_K=\Sigma i\ \varepsilon i+\Sigma j\ \varepsilon j$ and $Vj_K=\Sigma i\ \varepsilon j-\Sigma j\ \varepsilon i$.

7. A device for processing angular distance measuring radar signals as defined in claim 6, characterized by the fact that the analog/digital coding and Doppler processing means comprise in cascade an analog multiplexer (17) and an analog/digital converter (18).

8. A device for processing angular distance measuring radar signals as defined in claim 6, characterized by the fact that the digital computing means for each recurrent transmission of a vector $\vec{V}$ to calculate components $Vi_K=\Sigma i\ \varepsilon i+\varepsilon j\ \Sigma j$ and $Vj_K=\Sigma i\ \varepsilon j-\Sigma j\ \varepsilon i$ comprise in series a demultiplexer (20) and a specialized operator (21), this specialized operator comprising a first multiplier circuit (22) receiving coded components $\varepsilon i$, $\Sigma j$, a second multiplier (23) receiving coded components $\Sigma j$, $\varepsilon j$, a third multiplier circuit (24) receiving coded components $\varepsilon j$, $\Sigma i$, and a fourth multiplier circuit (25) receiving coded components $\varepsilon i$, $\Sigma i$, each multiplier delivering the elementary products $\varepsilon i$, $\Sigma j$, $\Sigma j\ \varepsilon j$, $\Sigma i\ \varepsilon j$, $\Sigma i\ \varepsilon i$ respectively, the said specialized operator further comprising, on the one hand, a first adder circuit (26) receiving at a first positive input the elementary product $\Sigma i\ \varepsilon j$, and at a second negative input the elementary product $\varepsilon\ \Sigma j$, this first adder circuit delivering components $Vj_K$ of the vector $\vec{V}$ such that $Vj_K=\Sigma i\ \varepsilon j-\varepsilon i\ \Sigma j$ and, on the other hand, a second adder circuit (27) receiving at a first positive input the elementary product $\varepsilon i$ $\Sigma i$ and at a second positive input the elementary product $\Sigma j$ $\varepsilon j$, this second adder circuit delivering component $Vi_K$ of the vector $\vec{V}$ such that $Vi_K = \Sigma j$ $\varepsilon j + \Sigma i$ $\varepsilon i$.

9. A device for processing angular measuring signals from a monopulse radar as defined in claim 1, characterized by the fact that the numbers p and q equal $-1$ and $+1$ respectively, the vectors $\vec{\gamma}$ and $\vec{\varepsilon}$ being defined respectively by the equations $\vec{\gamma} = \vec{\Sigma} - j$ $\vec{\Delta}$ and $\vec{\varepsilon} = \vec{\Sigma} + j$ $\vec{\Delta}$, the means of computing, for each recurrence of order K, components $Vi_K$, $Vj_K$ of the vertical reference vector $\vec{V}$ comprising on the one hand, for computation of components $Vi_K$, means of analog computation of the scalar product of vectors $\vec{\gamma}$ and $\vec{\varepsilon}$, $Vi_K = \vec{\gamma} \times \vec{\varepsilon}$, and on the other hand, for computation of components $Vj_K$, means of analog computation of the combined product $Vj_K = (\vec{\gamma} \wedge \vec{\varepsilon}) \cdot \vec{n}$, the analog computing means delivering signals representative of components $Vi = \cos \phi$ and $Vj = \sin \phi$ respectively, where $\phi$ represents dephasing of the complex plane between vectors $\vec{\gamma}$ and $\vec{\varepsilon}$, the computing means for each recurrence of order K of components $Vi_K$, $Vj_K$ of the distance measuring vector $\vec{V}$ further comprising at their outlet analog computing means (54), sampling circuits (51, 52) for each recurrence of order K of signals representative of components Vi, Vj of the vertical reference vector $\vec{V}$ delivering, for each recurrence of order K, components $Vi_K$, $Vj_K$ of the vertical reference vector $\vec{V}$.

10. A device for processing angular distance measuring signals from a monopulse radar as defined in claim 9, characterized by the fact that the computing means (43 to 50) comprise an operator circuit (43) receiving intermediate frequency signals $\Sigma$ (fi) and $\Delta$ (fi) and delivering signals representative of vectors $\vec{\varepsilon} = \vec{\Sigma} + j\vec{\Delta}$ and $\vec{\gamma} = \vec{\Sigma} - j\vec{\Delta}$, on two output tracks, and an amplitude limiting circuit (44, 45) on each operator circuit output, the computing means further comprising a first and second phase amplitude detector (46, 47) receiving directly and through the relative $\pi/2$ dephaser respectively, signals delivered by each limiter, each phase amplitude demodulator delivering signals Vi, Vj respectively representative of the cosinus and sinus of the phase vectors $\vec{\gamma}$ and $\vec{\varepsilon}$, such that $Vi = \cos \phi$ and $Vj = \sin \phi$.

11. A monopulse radar comprising a device to process distance measuring signals as defined in any one of claims 1 to 10.

FIG_1-a

FIG_1

FIG_1-b

FIG_1-c

0017 532

FIG.2

FIG_3

FIG_4

0017532